# FASCICULE DE BREVET EUROPEEN

(11) **EP 1 597 132 B1**
(45) Date de publication et mention de la délivrance du brevet: **27.08.2008**
(21) Numéro de dépôt: 04711356.8
(22) Date de dépôt: 16.02.2004
(51) Int. Cl.: B62D 6/04, B60G 3/20

(54) **METHODE ET SYSTEME DE SUSPENSION POUR LA COMPENSATIUON DU TIRAGE SUR UN VEHICULE A PIVOT VIRTUEL**
AUFHÄNGUNGSVERFAHREN UND -SYSTEM ZUM AUSGLEICH VON QUERZUG AN EINEM FAHRZEUG MIT VIRTUELLEM DREHPUNKT
SUSPENSION METHOD AND SYSTEM FOR COMPENSATION OF LATERAL PULL ON A VEHICLE WITH A VIRTUAL PIVOT

(30) Priorité: 17.02.2003 FR 0301902
(43) Date de publication de la demande: 23.11.2005
(73) Titulaire: Société de Technologie Michelin, 63000 Clermont-Ferrand (FR); Michelin Recherche et Technique S.A., 1763 Granges-Paccot (CH)
(72) Inventeur: ROOS, Gijsbert, F-63000 Clermont-Ferrand (FR); SOUYRI, Philippe, F-63260 Saint Gènes du Retz (FR)
(74) Mandataire: Lasson, Cédric Y. M.
(86) Numéro de dépôt international: PCT/EP2004/001433
(87) Numéro de publication internationale: WO 2004/076262

(56) Documents cités:
- WO-A-01/56819
- US-A- 4 863 188

## Description

La présente invention concerne la liaison au sol des véhicules, en particulier les dispositifs de suspension, et plus particulièrement l'équilibre du système de direction des essieux directeurs à pivots virtuels. Les essieux directeurs à pivots virtuels sont des essieux comportant au moins un "triangle" constitué de deux bras reliant des points différents de la caisse à des points différents du porte-roue. Le brevet US 4863188 décrit un exemple d'un tel système de direction. Dans ce brevet, l'exemple de système de suspension comporte deux triangles (inférieur et supérieur) définissent chacun un pivot virtuel.

On appelle généralement "tirage" la tendance qu'un véhicule peut avoir à dévier d'une trajectoire rectiligne en dehors de toute action sur le volant par le conducteur. Le tirage peut avoir de nombreuses origines différentes et ces origines sont souvent combinées. Le tirage peut par exemple être la conséquence d'une suspension mal réglée (pince, carrossage, chasse, angle de chasse), de pneumatiques défectueux, différents, mal gonflés ou inadaptés, d'un déséquilibre du système de direction, du vent ou de l'inclinaison transversale de la chaussée.

Le tirage lié à l'inclinaison de la chaussée est un problème connu. Les chaussées présentent généralement une inclinaison transversale, appelée " dévers ", destinée à faciliter l'écoulement des eaux. Cette inclinaison tend à dévier les véhicules vers le côté le plus bas de la route, c'est à dire vers l'extérieur de la chaussée du fait de la chasse. La chasse est utile à la stabilité du système de direction mais elle rend le système de direction sensible aux efforts latéraux agissant sur le véhicule. Cette tendance à la déviation oblige le conducteur à exercer un effort sur la direction du véhicule pour maintenir une trajectoire rectiligne. Les constructeurs de véhicules et les manufacturiers de pneumatiques tiennent compte de cette tendance lors de la définition du véhicule. C'est ainsi qu'on a conçu des épures de suspensions dissymétriques capables de compenser cette tendance. De même, certaines architectures de pneumatiques permettent de générer un léger tirage qui, s'il est orienté en sens inverse de celui occasionné par le dévers, peut minimiser ou annuler l'effort nécessaire sur le volant pour maintenir une trajectoire rectiligne.

En Europe, la grande majorité des véhicules étant destinée à rouler sur la droite de la chaussée (cette situation est appelée « roulage à droite »), leur conception et/ou leur monte de pneumatiques permettent de compenser le tirage lié au dévers moyen de la partie droite d'une chaussée. Cependant, cette configuration n'est généralement pas remise en cause dans les parties du marché (comme le Royaume-Uni) ou les véhicules circulent sur la partie gauche de la chaussée (situation appelée « roulage à gauche »). Le problème de tirage lié au dévers de la chaussée devient alors plus aigu car les corrections mises en oeuvre pour compenser le tirage à droite augmentent inéluctablement le tirage à gauche. Cette situation est inconfortable pour le conducteur qui doit exercer, sur la périphérie du volant du véhicule, un effort constant pour maintenir son véhicule en ligne droite. La taille de ces marchés ne justifie cependant pas le développement spécifique de véhicules profondément différents. De même, les manufacturiers de pneumatiques sont réticents à commercialiser localement des pneumatiques induisant un tirage inverse du fait, d'une part, de la faible demande et d'autre part, de la difficulté qu'il y a à contrôler la destination finale des produits dans un marché européen régi par la libre circulation des marchandises.

Cette situation, décrite ici à titre d'illustration, n'est pas limitée au cas du marché européen. D'autres marchés présentent la même problématique ou la problématique inverse. D'autre part, ce qui est décrit ici dans le cas (le plus aigu) de véhicules conçus et équipés pour compenser un tirage est bien entendu tout à fait valable (mais dans une moindre mesure) dans le cas d'un véhicule conçu et équipé de pneumatiques pour un comportement neutre pour un dévers nul et que l'on veut adapter au marché du roulage à droite ou à gauche.

Le document WO 01/56819 qui concerne cette même question de la compensation du tirage propose une solution pour les véhicules équipés d'essieux directeurs Mac Pherson. La solution proposée dans ce document n'est pas applicable à d'autres systèmes de suspension que les systèmes Mac Pherson.

Un objectif de l'invention est de proposer une solution applicable au cas des essieux directeurs comportant un pivot virtuel. Ces essieux peuvent cependant utiliser en outre une jambe de force MacPherson.

L'invention concerne une méthode de compensation de tirage pour véhicule, le système de suspension de l'essieu directeur dudit véhicule comprenant un pivot virtuel, ladite méthode consistant à appliquer un couple de braquage au porte-roue par l'intermédiaire de l'un des bras dudit pivot virtuel.

De préférence, le couple de braquage est appliqué au porte-roue sous la forme d'une force de braquage agissant au point d'articulation du bras sur le porte-roue.

De préférence, cette force de braquage est créée par une force transversale agissant sur le bras.

Selon un mode de réalisation, la force transversale est transmise au bras par un ressort sensiblement horizontal.

Selon un autre mode de réalisation, la force transversale est transmise au bras par un combiné ressort-amortisseur.

Alternativement, la force de braquage peut être créée par un couple agissant sur le bras.

La méthode selon l'invention peut également consister à appliquer un couple de braquage respectivement à chaque porte-roue de l'essieu directeur, les deux couples de braquage agissant de préférence dans le même sens.

Les différents principes de l'invention seront mieux compris à l'aide de la description des figures suivantes :
- Figure 1 : Schémas en vue de dessus d'un véhicule équipé d'une suspension à pivot virtuel,
- Figure 2 : Schémas en vue de derrière d'un véhicule équipé d'une suspension à pivot virtuel,
- Figure 3 : Schéma en vue de dessus d'un premier mode de réalisation de l'invention,
- Figure 4 : Schéma en vue de dessus d'un deuxième mode de réalisation de l'invention,
- Figure 5 : Schémas en vue de derrière d'un troisième mode de réalisation de l'invention,
- Figure 6 : Schémas en vue de dessus du troisième mode de réalisation de l'invention,
- Figure 7 : Schémas en vue de dessus d'une variante du troisième mode de réalisation de l'invention,
- Figure 8 : Schémas en vue de dessus d'un quatrième mode de réalisation de l'invention,
- Figures 9, 10, 11 : Schémas d'une variante du premier mode de réalisation de l'invention,

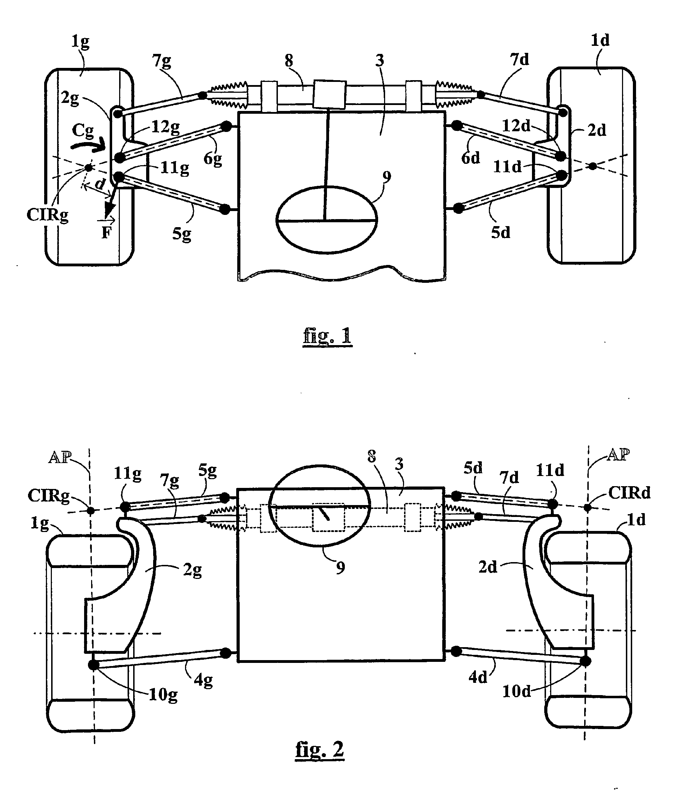

La figure 1 est un schéma partiel en vue de dessus d'un véhicule comportant un système de direction à pivot virtuel. La figure 2 est une vue de derrière en coupe du même véhicule. Les roues gauche 1g et droite 1d sont les roues avant directrices du véhicule. Chaque roue est respectivement portée par un porte-roue gauche 2g et un porte-roue droit 2d. Chaque porte-roue est lié à la caisse 3 par des éléments de suspension. Sur cet exemple, on a représenté un système de suspension comprenant un triangle inférieur (4g à gauche et 4d à droite, visibles sur figure 2), deux bras supérieurs (respectivement 5g et 6g à gauche, 5d et 6d à droite) et une biellette de direction (7g à gauche et 7d à droite). Une crémaillère de direction 8, contrôlée par le volant 9, synchronise les mouvements de braquage des deux roues.

Afin de décrire plus précisément le fonctionnement d'un tel système de direction, l'exposé qui va suivre concerne principalement la partie gauche de l'essieu et du véhicule.

Le degré de liberté de braquage de la roue 1g résulte du fait que la partie inférieure du porte-roue 2g est liée d'une part par une rotule inférieure 10g au triangle inférieur 4g et d'autre part par une rotule supérieure (11g et 12g) à chaque bras supérieur (5g et 6g). Dans un tel système, l'axe de pivot (AP) de la roue est l'axe (ici sensiblement vertical) qui contient le centre de la rotule inférieure 10g et l'intersection (CIRg) des lignes d'action des bras supérieurs. On parle dans ce cas de pivot virtuel car le point CIRg n'est pas matérialisé par une articulation comme l'est par exemple le point de pivot inférieur (rotule inférieure 10g). En outre, la position de l'axe de pivot est variable car le triangle formé par les bras supérieurs se déforme sensiblement au cours du mouvement de braquage.

Le mouvement de braquage du porte-roue autour de l'axe de pivot AP est contrôlé par la biellette de direction 7g. Selon l'invention, on utilise le fait que les rotules 11g et 12g se trouve à une distance (d) non nulle de l'axe de pivot (AP). Ceci permet de transmettre au porte-roue 2g, par l'intermédiaire d'un bras supérieur, un couple Cg tendant à faire braquer la roue dans le sens désiré. Par exemple, si le bras supérieur arrière 5g exerce sur le porte-roue une force horizontale *F̅̅̅* perpendiculaire au bras, cette force aura pour effet de créer un couple de braquage Cg tel que Cg = |*F̅*| * *d .* La force *F̅* peut avoir différentes origines comme on le verra plus loin. En contrôlant le sens et l'intensité de la force de braquage *F̅* et en fonction de la distance d, il est ainsi possible de contrôler le couple de braquage Cg.

Puisque le braquage des deux roues de l'essieu est synchronisé par la crémaillère 8, l'effet du couple de braquage Cg sur le tirage sera combiné à celui d'un couple Cd appliqué simultanément à la roue droite 1d si un tel couple de braquage Cd est également créé. C'est donc la différence entre les couples générés de part et d'autre du véhicule qui conditionne l'effet sur le tirage.

Les figures 1 et 2 illustrent un principe de l'invention qui est de transmettre au porte-roue, par l'intermédiaire de l'un des bras qui définissent le pivot virtuel, l'équivalent d'un effort permanent que le conducteur appliquerait sur le volant pour compenser ou limiter les effets du tirage. L'effet sur le braquage peut résulter d'efforts agissant dans l'un ou l'autre des systèmes de suspension de l'essieu directeur ou dans les deux à la fois.

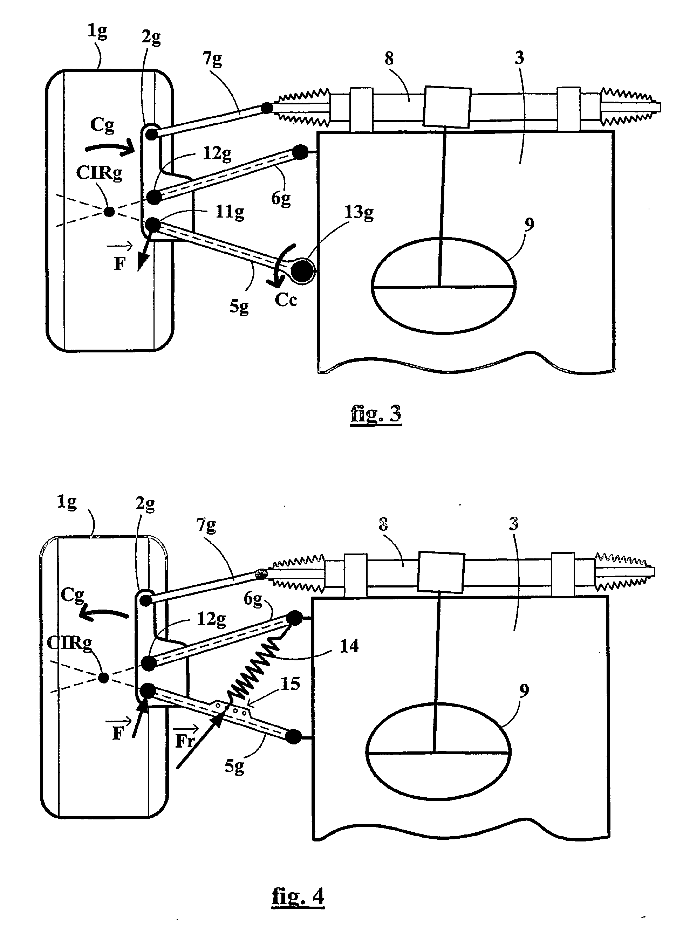

La figure 3 représente un premier mode de réalisation de l'invention. Cette vue est similaire à celle de la figure 1 sauf que seule la partie gauche du système de suspension est représentée. Dans ce mode de réalisation, la force de braquage *F̅* a pour origine un couple Cc exercé autour d'un axe sensiblement vertical par la caisse sur le bras supérieur 5g. Un tel couple peut être obtenu si l'articulation 13g est par exemple une articulation élastomérique montée précontrainte en torsion autour de son axe vertical. On peut également créer un couple Cc à l'aide d'un ressort adéquat indépendant de l'articulation. Le couple Cc doit être tel qu'en fonction de la longueur du bras 5g il corresponde à la force *F̅* désirée. Dans l'exemple représenté, le couple résultant de braquage Cg aura tendance à faire braquer la roue 1g vers l'intérieur du véhicule (vers la droite).

Le mode de réalisation représenté à la figure 4 est basé sur l'utilisation d'un ressort (ici un ressort de traction 14) qui exerce une force *F̅r* sur le bras 5g. On a représenté également des moyens de réglage 15 (sous la forme d'une pluralité de points d'attache) permettant de modifier la direction et/ou l'intensité de la force *F̅r* et donc de modifier la force de braquage *F̅* transmise au porte-roue 2g. On peut bien sûr également modifier la force de braquage en choisissant un ressort différent. Ce principe peut également facilement être monté a posteriori sur un véhicule existant. Le ressort et des moyens de fixations sous la forme de colliers s'adaptant sur les bras peuvent être fournis sur les marchés ou les parties de marché où une correction de tirage est recherchée. Dans l'exemple représenté ici, le couple Cg résultant aura tendance à faire braquer la roue 1g vers l'extérieur du véhicule (vers la gauche). C'est donc l'inverse de l'exemple illustré à la figure 3.

Parmi ces deux modes de réalisation de l'invention, celui de la figure 4 présente l'avantage supplémentaire d'être aisément modifiable y compris par un mécanicien après la mise en service du véhicule. Les figures 3 et 4 illustrent le cas d'une force de braquage transmise par le bras arrière 5g mais le même principe s'applique si les efforts sont appliqués au porte-roue par l'intermédiaire du bras avant 6g.

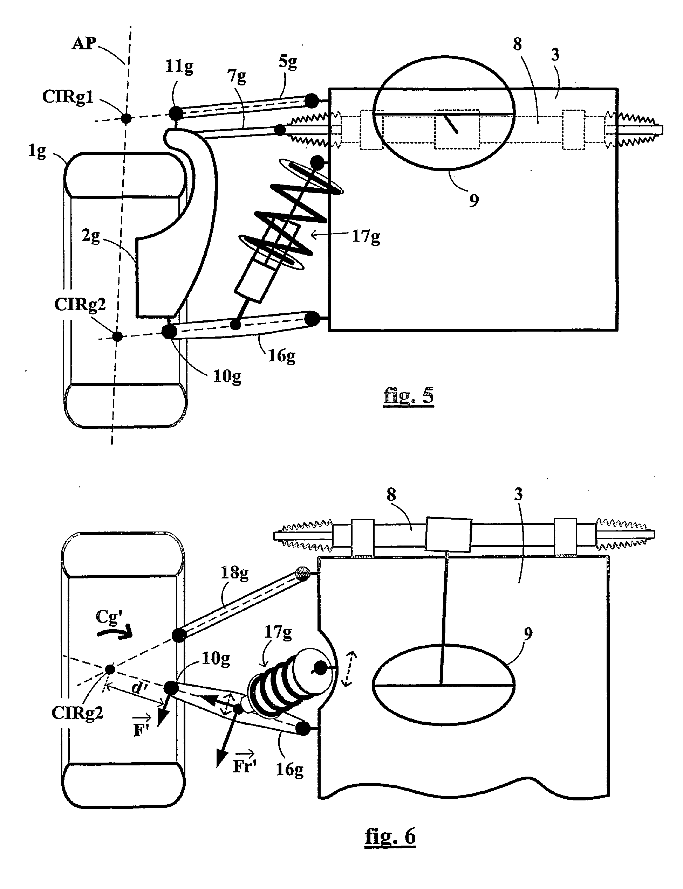

Les figures 5 et 6 décrivent un mode de réalisation basé sur un système de suspension à pivot inférieur virtuel et reprise de la charge par un combiné ressort-amortisseur, ce dernier prenant appui sur l'un des bras inférieur définissant le pivot virtuel. Sur l'exemple représenté, le pivot supérieur est également virtuel (identique à celui des figures 1 et 2) mais ceci n'est bien sûr pas nécessaire pour le fonctionnement de ce mode de réalisation. Sur la figure 6, on voit que le combiné 17g prend appui sur le bras inférieur arrière 16g. Du fait de son inclinaison, le combiné exerce une force ayant un composante horizontale et perpendiculaire (*F̅r'*) sur le bras 16g. Cette force donne naissance à la force de braquage *F̅* transmise au porte-roue 2g. On peut bien sûr faire varier la force de braquage en modifiant l'orientation du combiné et donc la force *F̅r*'. Pour cela, on peut déplacer le point d'attache supérieur du combiné sur la caisse 3 et/ou le point d'attache inférieur sur le bras 16g. Dans l'exemple représenté, le couple de braquage Cg' résultant aura tendance à faire braquer la roue 1g vers l'intérieur du véhicule (vers la droite).

L'inclinaison de l'axe de poussée du combiné peut résulter de l'emploi d'une pièce de liaison excentrique. La même pièce excentrique ou une autre peut également être montée sur la suspension de la roue opposée selon une orientation non symétrique de sorte que chaque roue de l'essieu directeur subisse un effet correctif non symétrique donc agissant dans le même sens (vers la droite ou la gauche). Une excentricité de l'ordre de 5 à 10 mm permet généralement d'obtenir l'effet recherché.

Le combiné ressort - amortisseur représenté ici permet une illustration simple. Cependant, le même effet est obtenu s'il s'agit d'un ressort seul ou d'un "faux combiné" c'est à dire d'un combiné dans lequel le ressort prend appui par l'une de ses extrémités seulement sur le combiné, l'autre extrémité prenant appui directement sur la caisse. Dans le cas d'un ressort seul ou d'un faux combiné, il est important de considérer que l'orientation de l'effort transmis est distincte de celle de la tige et que c'est bien la position et la direction de l'effort transmis par le ressort qui permet de créer la force *F̅r'* horizontale désirée. L'effet peut alors être obtenu de manière simple par exemple par l'interposition d'une cale entre le ressort et la caisse afin que la caisse transmette au ressort un couple autour d'un axe transversal qui se traduit par une composante *F̅r*' horizontale sur le bras.

De même, le combiné, le faux combiné ou le ressort peut prendre appui sur le bras avant (18g) ou sur un bras supérieur pour un effet comparable (si ce bras supérieur fait partie d'un pivot supérieur virtuel).

L'inclinaison de l'effort transmis par le ressort (ou le combiné) en vue de compenser le tirage peut venir s'ajouter à l'inclinaison normale de cet effort. En effet, on incline parfois les combinés par exemple pour des raisons d'encombrement mais dans ce cas, l'inclinaison étant symétrique d'un côté à l'autre du véhicule, elle n'a pas d'effet sur le tirage.

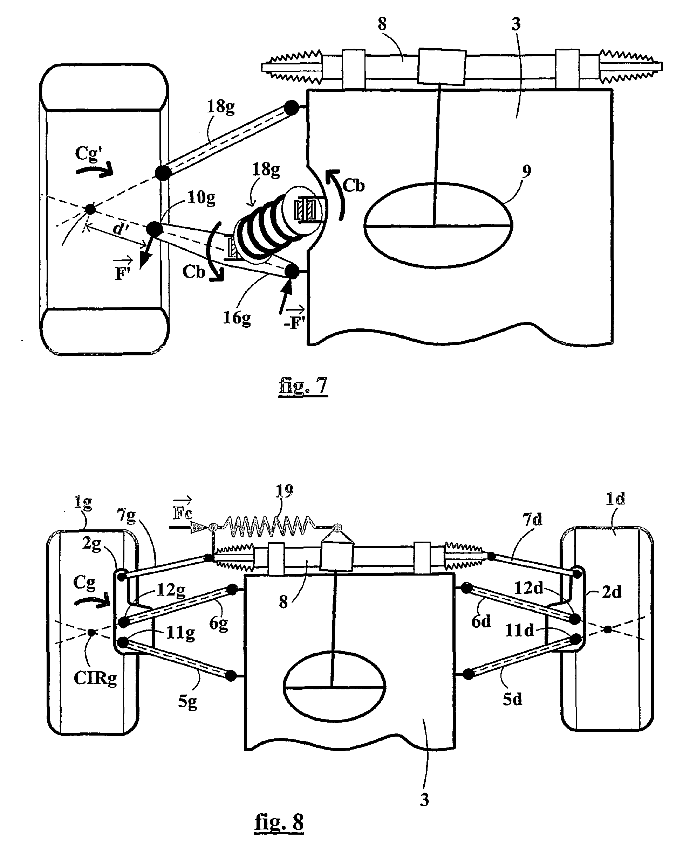

La figure 7 illustre une variante du mode de réalisation des figures 5 et 6 dans laquelle le combiné 18g transmet un couple Cb au bras inférieur. Ce couple, qui lui est transmis par la caisse, crée les forces (*F̅* et - *F̅*) aux extrémités du bras 16g. Ceci génère le couple de braquage Cg' sur le porte-roue (non représenté) qui dans cet exemple aura tendance à faire braquer la roue 1g vers l'intérieur du véhicule (vers la droite). Le couple Cb peut avoir comme origine une précontrainte de torsion dans le combiné 18g ou une liaison (au bras, à la caisse ou interne au combiné) présentant un effet de vis lorsque la charge verticale est transmise.

La figure 8 représente une autre façon de compenser le tirage qui consiste à utiliser un ressort 19 agissant directement au niveau du système de direction, par exemple au niveau de la crémaillère (8) ou d'un biellette (7g) de direction. Cette façon de compenser le tirage peut en outre s'appliquer à tous types de systèmes de suspension, y compris à ceux ne comportant pas de pivot virtuel. Ce système est susceptible d'être monté en post-équipement.

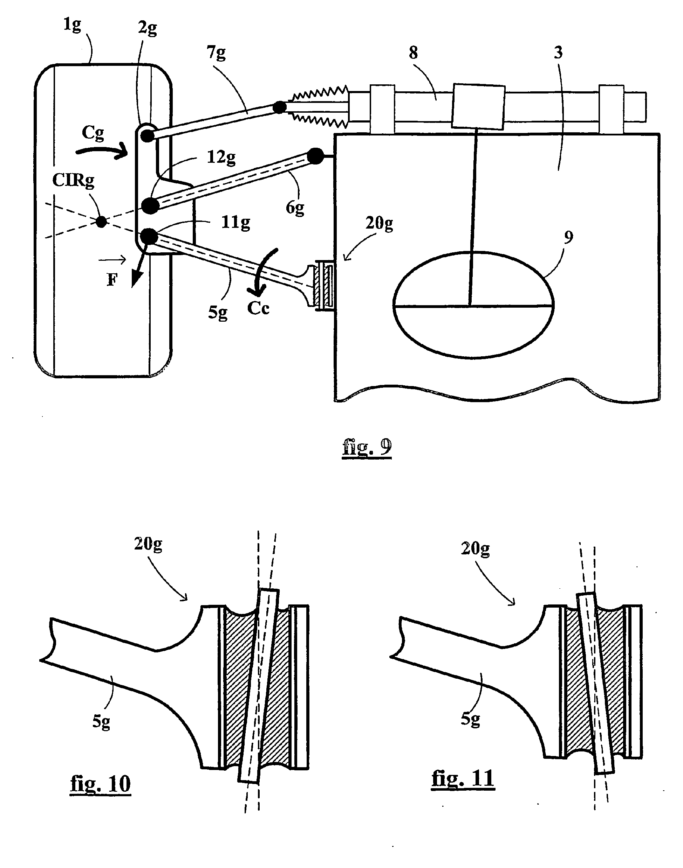

Les figures 9, 10 et 11 représentent une variante du système décrit à la figure 3 dans laquelle l'un des bras est relié à la caisse par une articulation élastomérique 20g disposée selon un axe longitudinal. Le couple Cc que la caisse 3 transmet au bras 5g trouve son origine dans une précontrainte de déformation conique de l'articulation 20g. La figure 10 montre la forme de l'articulation 20g lorsqu'elle est libre de toute contrainte. La figure 11 montre le cas où l'articulation 20g est montée dans le bras 5g selon une orientation inverse de celle de la figure 10 afin de générer un couple Cc inverse de celui représenté à la figure 9. On peut utiliser ce mode de réalisation en post-équipement, par exemple en remplacement d'une articulation neutre montée d'origine sur le véhicule.

Les figures montrent quelques exemples de modes de réalisation de l'invention mais il est évident que de nombreuses autres variantes sont possibles, en particulier ce qui a été décrit pour des bras inférieurs est tout à fait applicable à des bras supérieurs et vice-versa.

Comme on l'a vu plus haut, on peut appliquer l'invention simultanément de chaque coté de l'essieu mais on peut également l'appliquer simultanément sur le pivot inférieur et supérieur de l'une des roues ou des deux, afin d'obtenir le comportement global désiré du système de direction.

Dans le cas de l'adaptation d'un véhicule dont le comportement est connu, on peut également ne modifier qu'un seul coté du véhicule afin d'introduire la dissymétrie nécessaire. Au contraire, on peut obtenir une dissymétrie (et donc une correction du tirage) en utilisant des éléments identiques de part et d'autre du véhicule, chacune générant un couple de braquage de même sens (donc dissymétrique par rapport au véhicule), ces deux couples coopérant pour compenser le tirage.

L'ordre de grandeur du couple de braquage nécessaire peut varier pour un véhicule moyen de 2 à 10 Nm par roue selon les véhicules et la monte de pneumatiques. Cette correction n'est utile qu'en ligne droite, c'est à dire lorsque les roues sont peu ou pas braquées et lorsque la suspension est dans sa position moyenne. Une façon de vérifier le fonctionnement du système de l'invention est de placer les roues avant du véhicule sur des plaques à billes, les biellettes de direction étant déconnectées, et de mesurer le couple de rappel statique de chaque roue autour de sa position moyenne correspondant à la ligne droite.

Prenons l'exemple d'un véhicule conçu pour un comportement neutre en situation de roulage à droite et dont les systèmes de suspension sont symétriques, donc ne générant ensemble aucun couple de braquage. L'adaptation de ce véhicule au roulage à droite a été réalisée, par exemple, par une monte de pneumatiques spécifique. Ce véhicule peut être adapté au roulage à gauche, selon le principe de l'invention, soit en modifiant l'un de ses systèmes de suspension soit les deux. Dans le cas d'une modification des deux côtés, on peut utiliser des éléments identiques non symétriques de part et d'autre du véhicule. Globalement, ce véhicule fait alors appel à deux jeux de pièces différents pour s'adapter au deux types de roulage. Pour des raisons, par exemple, de logistique du marché du remplacement, on préfère utiliser des pièces uniques sur un même marché ou sur une même partie de marché et l'adaptation au roulage à gauche par le changement du jeu de pièces présente cet avantage.

## Revendications

1. Méthode de compensation de tirage pour véhicule, le système de suspension de l'essieu directeur dudit véhicule comprenant un pivot virtuel, ladite méthode consistant à appliquer un couple de braquage (Cg) au porte-roue (2g) par l'intermédiaire de l'un des bras (5g, 6g) dudit pivot virtuel.

2. Méthode selon la revendication 1 dans laquelle le couple de braquage (Cg) est appliqué au porte-roue (2g) sous la forme d'une force de braquage (*F̅*) agissant au point d'articulation du bras (5g) sur le porte-roue (2g).

3. Méthode selon la revendication 2 dans laquelle la force de braquage (*F̅, F̅*') est créée par une force transversale (*F̅r*, *F̅r*') agissant sur le bras (5g).

4. Méthode selon la revendication 3 dans laquelle la force transversale (*F̅r*) est transmise au bras (5g) par un ressort (14) sensiblement horizontal.

5. Méthode selon la revendication 3 dans laquelle la force transversale (*F̅r*') est transmise au bras (5g) par un combiné ressort-amortisseur (17g).

6. Méthode selon la revendication 2 dans laquelle la force de braquage (*F̅*, *F̅*') est créée par un couple (Cc, Cb) agissant sur le bras (5g, 16g).

7. Méthode selon l'une des revendications précédentes consistant à appliquer un couple de braquage (Cg, Cd) respectivement à chaque porte-roue (2g, 2d) de l'essieu directeur, les deux couples de braquage agissant de préférence dans le même sens.

## Claims

1. A method of compensating side pull in a vehicle, the suspension system of the steering axle of the said vehicle comprising a virtual pivot point, the said method consisting in applying a steering torque (Cg) to the wheel-carrier (2g) by way of one of the arms (5g, 6g) of the said virtual pivot point.

2. A method according to Claim 1, in which the steering torque (Cg) is applied to the wheel-carrier (2g) in the form of a steering force (*F̅*) acting on the point at which the arm (5g) is articulated to the wheel-carrier (2g).

3. A method according to Claim 2, in which the steering force (*F̅*, *F̅*') is generated by a transverse force (*F̅r*, *F̅r'*) acting on the arm (5g).

4. A method according to Claim 3, in which the transverse force (*F̅r*) is transmitted to the arm (5g) by a substantially horizontal spring (14).

5. A method according to Claim 3, in which the transverse force (*F̅r'*) is transmitted to the arm (5g) by a combined spring and shock absorber unit (17g).

6. A method according to Claim 2, in which the steering force (*F̅*, *F̅*') is generated by a torque (Cc, Cb) acting on the arm (5g, 16g).

7. A method according to claim 1, consisting in applying a steering torque (Cg, Cd) to each wheel-carrier (2g, 2d) of the steering axle respectively, with the two steering torques preferably acting in the same direction.

## Patentansprüche

1. Zugkompensationsverfahren für ein Fahrzeug, wobei das Federungssystem der Lenkachse des Fahrzeugs einen virtuellen Drehpunkt aufweist, wobei das Verfahren darin besteht, ein Lenkmoment (Cg) an den Radhalter (2g) mittels eines der Arme (5g, 6g) des virtuellen Drehpunkts anzuwenden.

2. Verfahren nach Anspruch 1, bei dem das Lenkmoment (Cg) an den Radhalter (2g) in Form einer Lenkkraft (F̅) angewendet wird, die auf den Gelenkpunkt des Arms (5g) am Radhalter (2g) einwirkt.

3. Verfahren nach Anspruch 2, bei dem die Lenkkraft (F̅, F̅') durch eine Querkraft (F̅r, F̅r') erzeugt wird, die auf den Arm (5g) einwirkt.

4. Verfahren nach Anspruch 3, bei dem die Querkraft (F̅r) von einer im Wesentlichen waagrechten Feder (14) auf den Arm (5g) übertragen wird.

5. Verfahren nach Anspruch 3, bei dem die Querkraft (F̅r') von einer Kombination aus Feder und Dämpfer (17g) auf den Arm (5g) übertragen wird.

6. Verfahren nach Anspruch 2, bei dem die Lenkkraft (F̅, F̅') von einem Drehmoment (Cc, Cb) erzeugt wird, das auf den Arm (5g, 16g) einwirkt.

7. Verfahren nach einem der vorhergehenden Ansprüche, das darin besteht, ein Lenkmoment (Cg, Cd) an jeden Radhalter (2g, 2d) der Lenkachse anzuwenden, wobei die zwei Lenkmomente vorzugsweise in gleicher Richtung wirken.
